# EUROPÄISCHE PATENTSCHRIFT

(11) **EP 1 800 533 B1**
(45) Veröffentlichungstag und Bekanntmachung des Hinweises auf die Patenterteilung: **18.02.2009**
(21) Anmeldenummer: 06026001.5
(22) Anmeldetag: 15.12.2006
(51) Int. Cl.: A01D 80/02

(54) **Rechen für eine Heuwerbungsmaschine**
Rake for a haymaking machine
Rateau pour une machine de fenaison

(30) Priorität: 22.12.2005 DE 102005061510
(43) Veröffentlichungstag der Anmeldung: 27.06.2007
(73) Patentinhaber: LTH Landtechnik Hohenmölsen GmbH, 06679 Hohenmölsen (DE)
(72) Erfinder: Daferner, Gerhard, 86554 Pöttmes (DE); Frinzl, Richard, 86529 Schrobenhausen (DE)
(74) Vertreter: Rapp, Bertram

(56) Entgegenhaltungen:
- EP-B1- 0 756 815
- FR-A- 1 573 631
- US-A1- 4 145 866

## Beschreibung

Die Erfindung betrifft einen Rechen für eine Heuwerbungsmaschine nach dem Oberbegriff des Anspruchs 1, sowie einen Doppelzinken, der für die Verwendung an einem solchen Rechen in einer Heuwerbungsmaschine, häufig auch Schwader genannt, ausgelegt ist.

Aus der EP 0 756 815 B1 ist ein Rechen für eine Heuwerbungsmaschine bekannt, dessen Zinken jeweils als Doppelzinken ausgebildet sind. Von einer an einem Zinkenträger befestigten Wicklung ragt an jedem ihrer beiden Enden jeweils ein Zinken tangential ab, von denen einer insgesamt geradlinig verläuft und der andere so verkröpft ist, dass sein für die Erfassung von Halmgut wirksamer freier Endabschnitt in einem bestimmten Abstand von dem ersten, geradlinigen Zinken und parallel zu diesem liegt. Bei der Bewegung des Rechens im Betrieb der Heuwerbungsmaschine eilt der Zinken mit der Verkröpfung dem zugeordneten geradlinigen Zinken nach, wobei beide um die Längsachse der Wicklung rotieren. Der Zweck dieser Anordnung besteht darin, dass der nacheilende Zinken zusätzliches Halmgut erfassen soll, welches von dem anderen, voreilenden Zinken liegen gelassen wurde, wodurch gegenüber einer Lösung mit nur einer einzelnen Zinkenreihe an jedem Rechen eines Arbeitskreisels die Arbeitsqualität der Maschine verbessert werden soll.

Aus der CH 479 997 ist eine Vielzweck-Heuerntemaschine zum Rechen, Zetten und Wenden von Erntegut bekannt, deren Rechen jeweils nur eine einzige Zinkenreihe aufweisen. Die Endabschnitte der Zinken sind gegenüber ihren senkrecht von dem Zinkenträger abragenden Anfangsabschnitten in Längsrichtung des Zinkenträgers zu dessen innerem Ende hin abgewinkelt. Bei allen Zinken der Reihe verlaufen die Endabschnitte ebenso wie die Anfangsabschnitte jeweils genau parallel zueinander. In einer gezeigten Ausführungsform sind die Endabschnitte des an dem Zinkenträger am weitesten außen angeordneten Zinkenpaares zum äußeren Ende des Zinkenträgers hin und gleichzeitig in Umfangsrichtung bezüglich der Längsachse des Zinkenträgers nach vorne abgewinkelt. Diese Ausführungsform ist jedoch nicht für das Schwaden, sondern nur für den Wende- oder Zettbetrieb der Maschine vorgesehen und soll dabei die nach rückwärts gerichtete Schleuderwirkung des Rechens verstärken. Bei einem Wechsel zwischen den verschiedenen Betriebsarten müssen die Rechen ausgetauscht werden.

Aus der FR 1 573 631 ist eine Maschine zur Bearbeitung von auf dem Boden liegenden Erntegut bekannt, bei der als Bearbeitungswerkzeuge zum Aufnehmen und Neuverteilen von Erntegut keine Rechen mit jeweils einer Reihenanordnung von Zinken, sondern nur einzelne Zinkenpaare zum Einsatz kommen, deren Schenkel eine leicht auseinandergespreizte Orientierung zueinander in Längsrichtung des Zinkenträgers aufweisen und in der Arbeitsstellung beide deutlich schräg zum Boden stehen. Die Besonderheit dieser Maschine liegt darin, daß die Lage der Zinkenpaare manuell verstellt und in unterschiedlichen Stellungen arretiert werden kann, um sie an verschiedene Arbeitsweisen der Maschine und/oder an verschiedene Arten von zu bearbeitendem Erntegut anzupassen.

In Anbetracht des Standes der Technik besteht die Aufgabe der Erfindung darin, einen neuen Rechen für eine Heuwerbungsmaschine zu schaffen, mit dem die Arbeitsqualität der Maschine weiter gesteigert werden kann, und einen Doppelzinken für die Verwendung an einem solchen Rechen bereitzustellen.

Diese Aufgabe wird erfindungsgemäß durch einen Rechen mit den Merkmalen des Anspruchs 1 bzw. durch einen Doppelzinken mit den Merkmalen des Anspruchs 13 gelöst. Vorteilhafte Ausgestaltungen sind in den jeweiligen Unteransprüchen angegeben.

Durch die erfindungsgemäße Schrägstellung zumindest der freien Endabschnitte der Zinken zumindest einer der beiden Zinkengruppen eines Rechens gegenüber denjenigen der anderen Zinkengruppe wird erreicht, daß die Zinkengruppe mit den schrägen Endabschnitten der Zinken auch solche Halme erfassen kann, die unter einem steilen Winkel zum Boden liegen, d.h. deren Lage nicht weit von einer senkrechten Lage abweicht. Solche Halme werden nämlich durch einen Rechen, dessen Zinken mit ihrem freien Endabschnitt am tiefsten Punkt ihrer Rotationsbewegung annähernd senkrecht zum Boden stehen, nicht wirksam erfasst. Bei einem erfindungsgemäßen Rechen geraten solche Halme hingegen in Eingriff mit den freien Endabschnitten einer der beiden Zinkengruppen, nämlich mit denjenigen, die nicht senkrecht zur Längsachse des Zinkenträgers, sondern schräg zu ihr und deshalb am tiefsten Punkt der Rotationsbewegung nicht annähernd senkrecht, sondern schräg zum Boden stehen.

Einen Anhaltspunkt für die Dimensionierung der Schrägstellung der freien Endabschnitte einer Zinkengruppe bildet der Versatz zwischen den beiden Zinkengruppen in Richtung der Längsachse des Zinkenträgers. Zweckmäßigerweise ist der Winkel, unter dem die freien Endabschnitte der Zinken einer Gruppe schräg zu denjenigen der anderen Gruppe stehen, so gewählt, dass besagter Versatz zwischen den beiden Zinkengruppen durch die Schrägstellung zumindest ungefähr überbrückt wird. Hierdurch wird gewährleistet, dass auch die unter einem steilen Winkel zum Boden stehenden Halme durch die Zinken der Gruppe mit schrägen Endabschnitten wirksam erfasst werden können.

Besonders vorteilhaft ist es, für einen erfindungsgemäßen Rechen Doppelzinken zu verwenden, in denen jeweils ein Zinken einer Gruppe einstückig mit einem Zinken der anderen Gruppe kombiniert ist. In diesem Fall sind an dem Zinkenträger des Rechens nur Doppelzinken eines einzigen Typs nebeneinander in einer Reihe angeordnet, wodurch sich die Herstellung der Zinken und die Montage des Rechens sowie eventuelle Reparaturarbeiten vereinfachen.

Weitere Vorteile und Merkmale der Erfindung gehen aus der nachfolgenden Beschreibung von Ausführungsbeispielen unter Bezugnahme auf die Zeichnungen hervor. In diesen zeigt
- Fig. 1: eine schematische Seitenansicht einer mit erfindungsgemäßen Rechen ausgerüsteten Heuwerbungsmaschine,
- Fig. 2: eine schematische Draufsicht auf eine mit erfindungsgemäßen Rechen ausgerüsteten Heuwerbungsmaschine,
- Fig. 3: eine erste Ausführungsform eines erfindungsgemäßen Doppelzinkens in drei Ansichten,
- Fig. 4: eine zweite Ausführungsform eines erfindungsgemäßen Doppelzinkens in drei Ansichten,
- Fig. 5: eine dritte Ausführungsform eines erfindungsgemäßen Doppelzinkens in drei Ansichten,
- Fig. 6: eine vierte Ausführungsform eines erfindungsgemäßen Doppelzinkens in drei Ansichten,
- Fig. 7: eine fünfte Ausführungsform eines erfindungsgemäßen Doppelzinkens in drei Ansichten, und
- Fig. 8: eine sechste Ausführungsform eines erfindungsgemäßen Doppelzinkens in drei Ansichten.

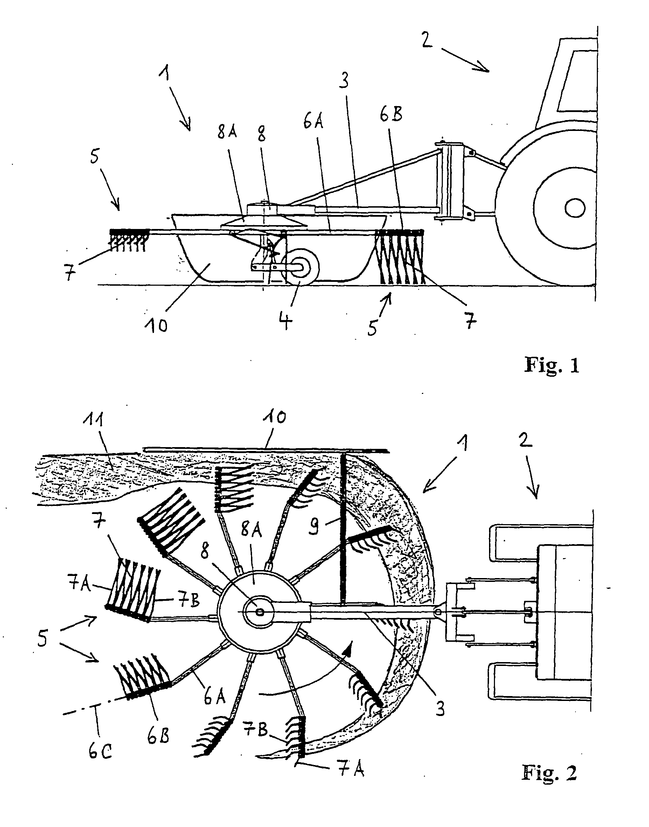

In den Figuren 1 und 2 ist eine Heuwerbungsmaschine, auch Schwader genannt, mit einem Arbeitskreisel 1 in einer Seitenansicht dargestellt. Die Maschine wird von einem Schlepper 2 gezogen und angetrieben. In der gezeigten Arbeitsstellung wird der Arbeitskreisel 1 durch ein Maschinengestell 3, welches auf Rädern 4 läuft, waagrecht in geeignetem Abstand vom Boden geführt. Der Arbeitskreisel 1 dreht sich im Betrieb der Maschine entgegen dem Uhrzeigersinn, wie es in Fig. 2 durch einen gekrümmten Pfeil angedeutet ist. Er enthält mehrere Rechen 5, die jeweils aus einem Zinkenträger 6A, 6B und einer Vielzahl von Zinken 7 bestehen. Die Zinken 7 eines Rechens 5 sind hierbei drehfest an einem Außenabschnitt 6B des Zinkenträgers 6A, 6B angebracht, dessen Innenabschnitt 6A in einer an einem Getriebe 8 gelagerten Glocke 8A drehbar um seine Längsachse drehbar gelagert ist. In Fig. 2 ist an einem der Rechen 5 noch die Längsachse 6C des Außenabschnitts 6B des Zinkenträgers 6A, 6B eingezeichnet, die für später folgende Erläuterungen von Bedeutung ist.

Die Zinken 7 jedes Rechens 5 werden im Verlauf einer Umdrehung des Arbeitskreisels 1 durch eine von dem Getriebe 8 bewirkte Drehbewegung des jeweiligen Zinkenträgers 6A, 6B zwischen einer vom Boden abgehobenen, annährend waagrechten Stellung, die in Fig. 1 links zu sehen ist, und einer auf den Boden abgesenkten, annähernd senkrechten Stellung, die in Fig. 1 rechts zu sehen ist, hin und her bewegt, so dass sie je nach ihrer momentanen Position am Umfang des Arbeitskreisels 1 abwechselnd außer oder in Eingriff mit dem zu sammelnden Halmgut gelangen. Ein an einem Ausleger 9 aufgehängtes Schwadtuch 10 begrenzt die Breite des gebildeten Schwads 11.

Die Zinken 7 eines Rechens 5 bestehen vorzugsweise aus Federstahl. Wie in Fig. 1 am besten rechts und in Fig. 2 am besten links zu erkennen ist, sind die Zinken 7 jeweils entlang des Außenabschnitts 6B des Zinkenträgers 6A, 6B reihenförmig angeordnet. Dabei weist ein Rechen 5 zwei Gruppen 7A und 7B von Zinken 7 auf, nämlich solche 7A, die insgesamt annähernd geradlinig senkrecht von dem Außenabschnitt 6B des Zinkenträgers 6A, 6B abragen, und solche 7B, die in einer bestimmten Richtung abgewinkelt sind daher zumindest teilweise, nämlich zu ihrem freien Ende hin, schräg zu den anderen 7A verlaufen. Beide Zinkengruppen 7A und 7B sind jeweils als eine äquidistante Reihe angeordnet und die beiden Reihen sind in Richtung der Längsachse des Außenabschnitts 6B des Zinkenträgers 6A, 6B gegeneinander versetzt. Die Form der Zinken 7 jeder der beiden Gruppen 7A und 7B sowie deren Anordnung relativ zueinander wird nachfolgend anhand eines einzelnen Zinkenpaares, welches zwei unmittelbar benachbarte Zinken umfasst, von denen jeder einer anderen der beiden verschiedenen Zinkengruppen 7A und 7B angehört, im einzelnen erläutert. Dabei hat das Zinkenpaar zweckmäßigerweise die Form eines so genannten Doppelzinkens, d.h. die beiden Zinken des Paares sind aus einem einzigen Stück Federstahl hergestellt, also einstückig miteinander verbunden.

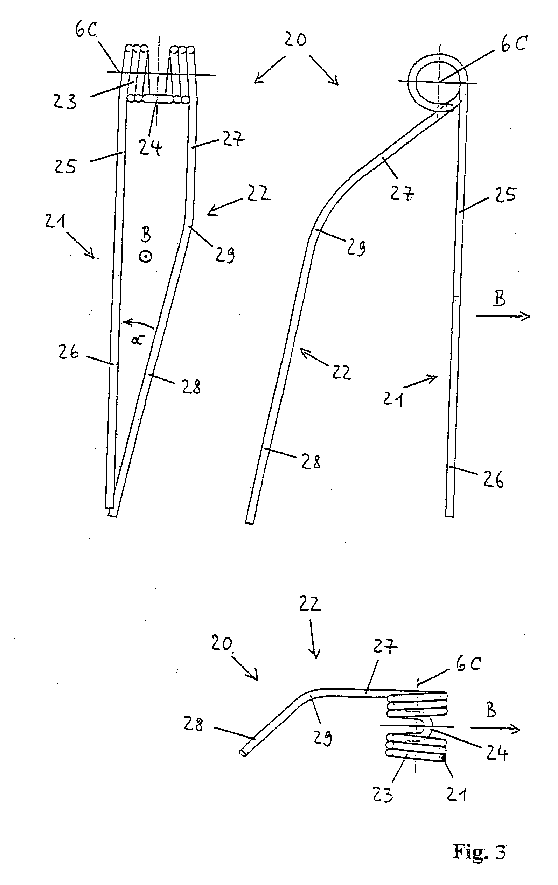

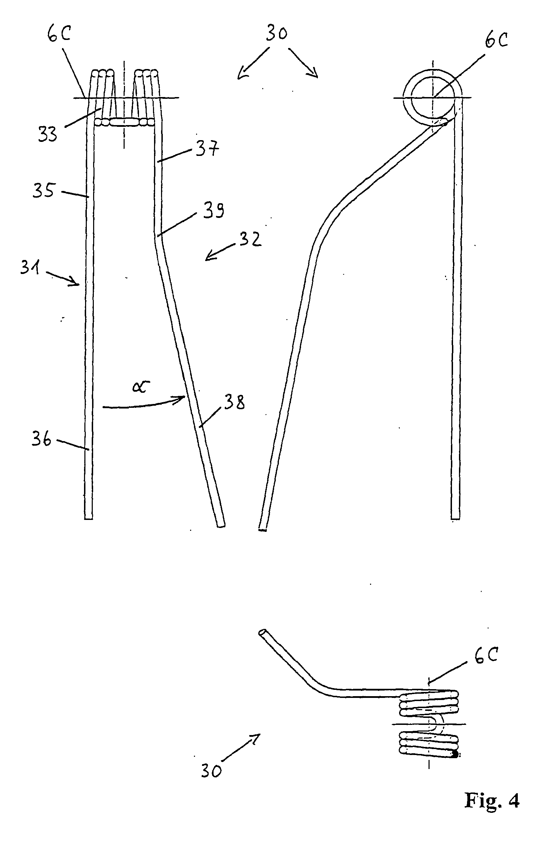

Fig. 3 zeigt drei verschiedene Ansichten einer ersten Ausführungsform eines erfindungsgemäßen Doppelzinkens 20. Die Ansicht rechts oben ist die Seitenansicht in der zum Boden abgesenkten Stellung, wobei die Blickrichtung der Richtung der Längsachse 6C des Außenabschnitts 6B des Zinkenträgers 6A, 6B entspricht, und zwar radial auswärts in Bezug auf den Arbeitskreisel 1. Für die anderen beiden Ansichten, nämlich die Vorderansicht links oben und die Draufsicht rechts unten, ist der Doppelzinken 20 aus der Seitenansicht in bekannter Weise um eine senkrechte Achse nach links bzw. um eine waagrechte Achse nach oben umgeklappt. In der Seitenansicht und in der Draufsicht ist die Bewegungsrichtung des Doppelzinkens 20 gegenüber dem Boden beim Betrieb in einer Heuwerbungsmaschine jeweils durch einen Pfeil B an der rechten Seite gekennzeichnet, in der Vorderansicht durch ein aus der Zeichenebene zeigende Pfeilspitzensymbol B. Hinsichtlich der Anordnung der Ansichten entsprechen die Darstellungen der weiteren Ausführungsbeispiele in den Figuren 4 bis 8 derjenigen von Fig. 3.

Der in Fig. 3 gezeigte Doppelzinken 20 besteht aus einem ersten Zinken 21, einem zweiten Zinken 22 und einer Wicklung 23, welche die beiden Zinken 21 und 22 miteinander verbindet und durch die Formgebung eines Mittelabschnitts 24 dazu vorgerichtet ist, an dem Außenabschnitt 6B des Zinkenträgers 6A, 6B drehfest befestigt zu werden, und zwar so, dass die Längsachse der Wicklung 23 mit der Längsachse 6C des Außenabschnitts 6B des Zinkenträgers 6A, 6B zusammenfällt. Die Längsachse der Wicklung 23 ist daher in Fig. 3 ebenfalls mit 6C gekennzeichnet. Die Zinken 21 und 22 sowie die Wicklung 23 sind aus einem einzigen Stück Federstahl von vorzugsweise kreisförmigem Querschnitt hergestellt. Der erste Zinken 22 ist in Bezug auf die Bewegungsrichtung B gegenüber dem Boden voreilend und der zweite Zinken 22 nacheilend. Aufgrund seines geradlinigen tangentialen Abragens von der Wicklung 23 ist der erste Zinken 21 in der Draufsicht rechts unten eigentlich nicht zu sehen und daher dort durch einen schwarzen Kreis am rechten unteren Ende der Wicklung 23 kenntlich gemacht.

Der erste Zinken 21 besitzt einen von einem Ende der Wicklung 23 ausgehenden Anfangsabschnitt 25 und einen freien Endabschnitt 26, der zum Eingriff mit dem zu sammelnden Halmgut bestimmt ist. Ebenso besitzt der zweite Zinken 22 einen vom anderen Ende der Wicklung 23 ausgehenden Anfangsabschnitt 27, und einen freien Endabschnitt 28, der zum Eingriff mit dem zu sammelnden Halmgut bestimmt ist. Dabei ragt der Anfangsabschnitt 27 des zweiten Zinkens 22 ebenso wie der Anfangsabschnitt 25 des ersten Zinkens 21 tangential, jedoch schräg zu diesem und, in Bezug auf die vorgesehene Bewegungsrichtung B gegenüber dem Boden, nach hinten von der Wicklung 23 ab, was in der Seitenansicht von Fig. 3 ohne weiteres zu erkennen ist.

Zwischen dem Anfangsabschnitt 27 und dem freien Endabschnitt 28 hat der zweite Zinken 22 noch einen Krümmungsabschnitt 29, in dem sich die Richtung des Zinkens 22 gegenüber dem Anfangsabschnitt 27 ändert, und zwar so, dass unter anderem in der Seitenansicht der Winkel zwischen seinem Endabschnitt 28 und demjenigen 26 des ersten Zinkens 21 kleiner ist als der Winkel zwischen den beiden Anfangsabschnitten 27 und 25. Die Krümmung in dieser Ansicht dient nur der Einstellung eines angemessenen Abstandes zwischen den beiden Endabschnitten 26 und 28 und ist für die vorliegende Erfindung nicht ausschlaggebend.

Von entscheidender Bedeutung für die vorliegende Erfindung ist vielmehr die in der Vorderansicht links oben erkennbare Richtungsänderung des zweiten Zinkens 22, durch die der in dieser Ansicht parallele Verlauf der beiden Anfangsabschnitte 25 und 27 in einen zueinander schrägen Verlauf der beiden freien Endabschnitte 26 und 28 übergeht. Der Sinn dieser Formgebung des zweiten Zinkens 22 besteht darin, dass dieser damit in die Lage versetzt wird, in seinem Endabschnitt 28 mit solchem Halmgut in Eingriff zu gelangen, welches unter einem steilen Winkel, d.h. ungefähr senkrecht zum Boden liegt und bei einem in der Vorderansicht auf ganzer Länge parallelen Verlauf der beiden Zinken 21 und 22 von keinem der beiden erfasst würde.

Wie sowohl in der Vorderansicht, als auch in der Draufsicht zu sehen ist, sorgt die Richtungsänderung des zweiten Zinkens 22 im Krümmungsabschnitt 29 dafür, dass die Enden der beiden Zinken 21 und 22 in Bezug auf die Bewegungsrichtung B annähernd auf einer Linie hintereinander liegen. Der Winkel α der Schrägstellung des freien Endabschnitts 28 des zweiten Zinkens 22 in der Vorderansicht ist also so gewählt, dass die Entfernung des Endes des freien Endabschnitts 28 des zweiten Zinkens 22 von seinem Anfangsabschnitt 27 in Richtung der Längsachse 6C der Wicklung 23 etwa dem Abstand der beiden Anfangsabschnitte 25 und 27 der beiden Zinken 21 und 22 entspricht. Der Winkel α beträgt in dem dargestellten Beispiel ca. 15°. Es versteht sich, dass der Betrag des Winkels in weiten Grenzen variieren kann, wobei für die Erzielung einer bestimmten Entfernung des Endes des freien Endabschnitts 28 von dem Anfangsabschnitt 27 in Richtung der Längsachse 6C der Wicklung 23 der Winkel α umso größer gewählt werden muss, je länger der zur Wicklung 23 tangentiale, geradlinige Anfangsabschnitt 27 ist.

Die Optimierung der verschiedenen geometrischen Parameter des gekrümmten bzw. abgewinkelten zweiten Zinkens 22 liegt im fachmännischen Ermessen. Eine Richtgröße hierfür ist der Abstand der Anfangsabschnitte 25 und 27 der beiden Zinken 21 und 22 in der Vorderansicht, der durch die Schrägstellung des freien Endabschnitts 28 des zweiten Zinkens 22 in der Vorderansicht vorzugsweise zumindest annähernd überbrückt werden sollte, wie es in Fig. 3 zusehen ist. Dabei kann es grundsätzlich auch sinnvoll sein, dass der freie Endabschnitt 28 des zweiten Zinkens 22 in der Vorderansicht den freien Endabschnitt 26 des ersten Zinkens 21 kreuzt, so dass sein Ende in der Darstellung von Fig. 3 seitlich weiter links liegen würde als dasjenige des freien Endabschnitts 26 des ersten Zinkens 21. Die Gesamtlänge der beiden Zinken 21 und 22 ist eine Frage der Anpassung der Lage ihrer Enden an die im Betrieb als Drehachse fungierende Wicklungsachse 6C.

Es versteht sich, dass die erfindungsgemäß beabsichtigte Wirkung, steil stehende Halme zu erfassen, nicht davon abhängt, dass der zweite Zinken 22, der im Betrieb innerhalb einer Heuwerbungsmaschine dem ersten Zinken 21 in Bezug auf den Kontakt mit dem Halmgut nacheilt, einen in der Vorderansicht schrägen Endabschnitt 28 aufweist. Ebenso gut könnte stattdessen der Endabschnitt 28 des zweiten Zinkens 22 gerade verlaufen und dafür der Endabschnitt 26 des ersten Zinkens 21 demgegenüber schräg abgewinkelt sein. Die Schrägstellung eines Endabschnitts 26 oder 28 ist also zwischen den beiden Zinken 21 und 22 austauschbar. Des weiteren wäre es auch denkbar, dass nicht nur einer der beiden Zinken 21 und 22 in der Vorderansicht schräg und nicht senkrecht zur Längsachse 6C der Wicklung 23 verläuft, sondern es könnten auch beide Endabschnitte 26 und 28 gegenüber einer zur Längsachse 6C der Wicklung 23 senkrechten Richtung abgewinkelt sein. Entscheidend ist für die Erfindung nur, dass die Endabschnitte 26 und 28 der beiden Zinken 21 und 22 in der Vorderansicht nicht parallel zueinander liegen.

In den nachfolgenden Figuren 4 bis 8 sind weitere Ausführungsformen eines erfindungsgemäßen Doppelzinkens dargestellt, welche dieselbe grundsätzliche Funktion wie die erste Ausführungsform erfüllen und dieser in ihrer Gestalt weitgehend ähnlich sind. Die nachfolgende Beschreibung dieser weiteren Ausführungsformen beschränkt sich daher im wesentlichen auf die Aufzeigung der jeweiligen Besonderheiten, die von der ersten Ausführungsform nach Fig. 3 abweichen. Für die Dimensonierung der geometrischen Parameter des zweiten Zinkens gelten bei allen weiteren Ausführungsformen sinngemäß die gleichen Gesichtspunkte wie bei der ersten Ausführungsform.

Fig. 4 zeigt eine zweite Ausführungsform eines erfindungsgemäßen Doppelzinkens 30, die sich von der ersten lediglich dadurch unterscheidet, dass in der Vorderansicht links oben die Krümmung des zweiten Zinkens 32 im Krümmungsabschnitt 39 eine im Vergleich zur ersten Ausführungsform entgegen gesetzte Richtung hat, so dass der freie Endabschnitt 38 des zweiten Zinkens 32 nicht auf den freien Endabschnitt 36 des ersten Zinkens 31 zu, sondern von diesem weg gerichtet ist. Auch bei dieser Ausführungsform können durch den schräg verlaufenden freien Endabschnitt 38 des zweiten Zinkens 32 Halme, die nahezu senkrecht zum Boden liegen, erfasst werden.

Wie Fig. 4 erkennen lässt, ist bei der zweiten Ausführungsform der Winkel α der Schrägstellung des freien Endabschnitts 38 des zweiten Zinkens 32 in der Vorderansicht genau so groß wie bei der ersten Ausführungsform, hat aber die entgegen gesetzte Richtung, und der Abstand der Enden der freien Endabschnitte 36 und 38 der beiden Zinken 31 und 32 beträgt ungefähr das Doppelte des Abstandes der Anfangsabschnitte 35 und 37. Somit entspricht auch hier die Entfernung des Endes des freien Endabschnitts 38 von dem Anfangsabschnitt 37 in Richtung der Längsachse 6C der Wicklung 33 etwa dem Abstand der beiden Anfangsabschnitte 35 und 37 der beiden Zinken 31 und 32.

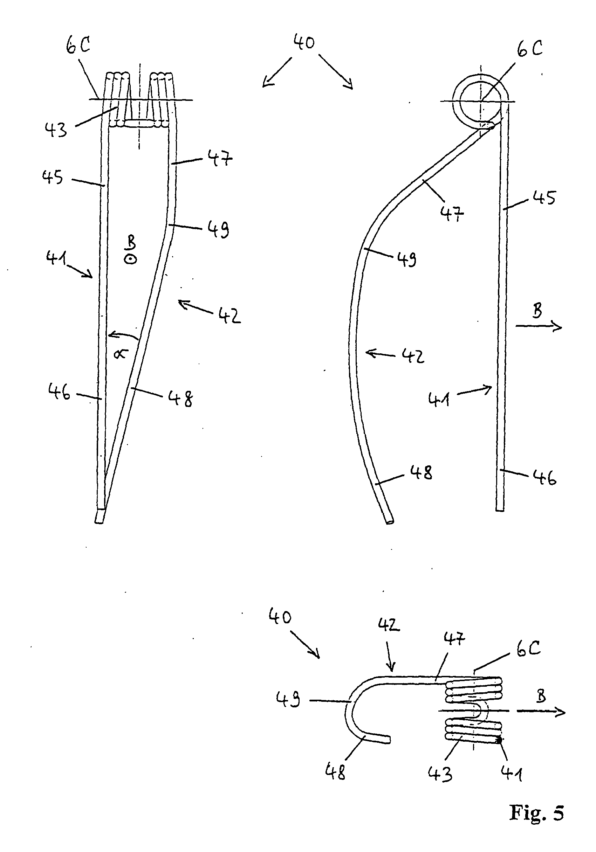

Fig. 5 zeigt eine dritte Ausführungsform eines erfindungsgemäßen Doppelzinkens 40, die sich von der ersten dadurch unterscheidet, dass sich in der Seitenansicht rechts oben die Krümmung des zweiten Zinkens 42 nicht nur auf einen relativ kurzen Bereich beschränkt, sondern der Krümmungsabschnitt 49 lang gestreckt ist und fließend in den freien Endabschnitt 48 des zweiten Zinkens 42 übergeht, und ferner der Krümmungswinkel insgesamt so groß ist, dass der freie Endabschnitt 48 in der Seitenansicht nicht mehr von dem freien Endabschnitt 46 des ersten geradlinigen Zinkens 41 weg, sondern auf ihn zu gerichtet ist.

Wie die Vorderansicht links oben zeigt, stimmt bei der dritten Ausführungsform die Gestalt des Doppelzinkens 40 hinsichtlich der erfindungswesentlichen Schrägstellung des freien Endabschnitts 48 des zweiten Zinkens 42 in dieser Ansicht mit der ersten Ausführungsform überein.

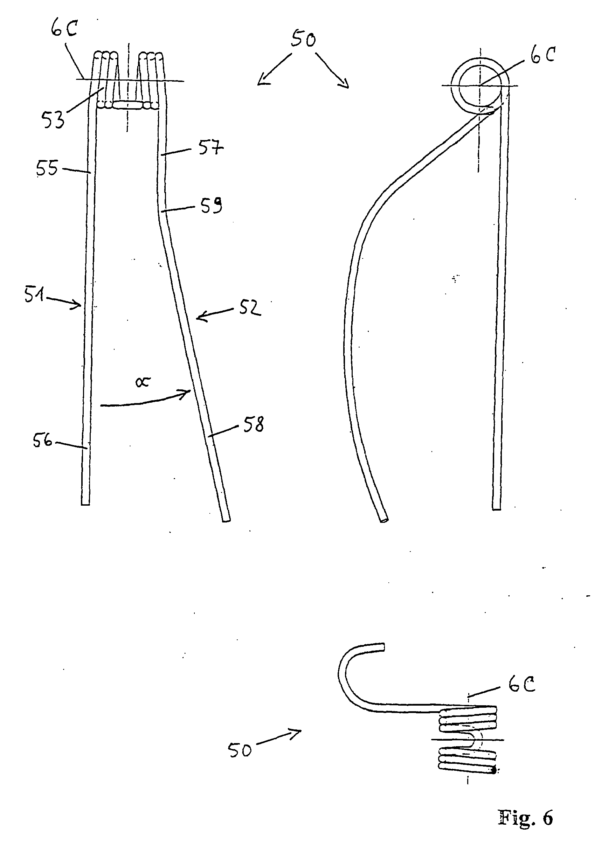

Die vierte in Fig. 6 gezeigte Ausführungsform eines Doppelzinkens 50 steht zu der dritten in der gleichen Beziehung wie die zweite zur ersten. Dies bedeutet, dass sie sich von der dritten Ausführungsform lediglich dadurch unterscheidet, dass in der Vorderansicht links oben die Krümmung des zweiten Zinkens 52 im Krümmungsabschnitt 59 eine entgegen gesetzte Richtung hat, so dass der freie Endabschnitt 58 des zweiten Zinkens 52 in der Vorderansicht nicht auf den freien Endabschnitt 56 des ersten Zinkens 51 zu, sondern von diesem weg gerichtet ist. Auch bei dieser Ausführungsform können durch den schräg verlaufenden freien Endabschnitt 58 des zweiten Zinkens 52 Halme, die nahezu senkrecht zum Boden liegen, erfasst werden.

Wie Fig. 6 erkennen lässt, ist bei der vierten Ausführungsform der Winkel der Schrägstellung des freien Endabschnitts 58 des zweiten Zinkens 52 in der Vorderansicht genau so groß wie bei der dritten Ausführungsform, hat aber die entgegen gesetzte Richtung, und der Abstand der Enden der freien Endabschnitte 56 und 58 der beiden Zinken 51 und 52 beträgt ungefähr das Doppelte des Abstandes der Anfangsabschnitte 55 und 57. Somit entspricht auch hier die Entfernung des Endes des freien Endabschnitts 58 von dem Anfangsabschnitt 57 in Richtung der Längsachse 6C der Wicklung 53 etwa dem Abstand der beiden Anfangsabschnitte 55 und 57 der beiden Zinken 51 und 52.

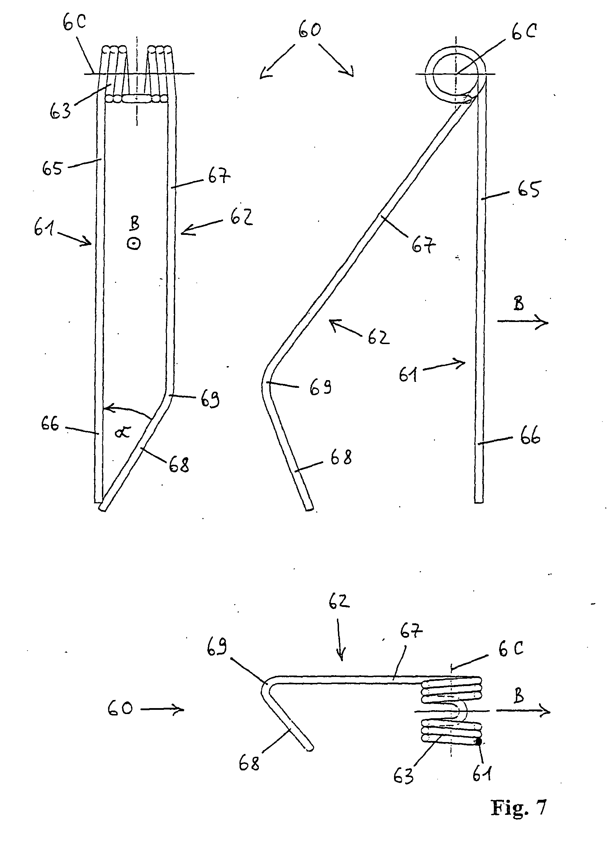

Fig. 7 zeigt eine fünfte Ausführungsform eines erfindungsgemäßen Doppelzinkens 60, die sich von der ersten in Fig. 3 gezeigten vor allem dadurch unterscheidet, dass in der Seitenansichtrechts rechts oben der durch den Krümmungsabschnitt 69 realisierte Krümmungswinkel des zweiten Zinkens 62 so groß ist, dass der freie Endabschnitt 68 des zweiten Zinkens 62 nicht mehr von dem freien Endabschnitt 66 des ersten geradlinigen Zinkens 61 weg, sondern auf ihn zu gerichtet ist. Diese Neigung des freien Endabschnitts 68 des zweiten Zinkens 62 in der Bewegungsrichtung B kann für den Eingriff mit dem zu sammelnden Halmgut vorteilhaft sein.

Wie die Vorderansicht in Fig. 7 links oben zeigt, stimmt bei der fünften Ausführungsform die Gestalt des Doppelzinkens 60 hinsichtlich der erfindungswesentlichen Schrägstellung des freien Endabschnitts 68 des zweiten Zinkens 62 in dieser Ansicht mit der ersten Ausführungsform grundsätzlich überein. Allerdings ist hier gegenüber der ersten Ausführungsform der geradlinig von der Wicklung 63 abragende Anfangsabschnitt 67 des zweiten Zinkens 62 länger und der freie Endabschnitt 68 dafür kürzer. Um mit dem freien Endabschnitt 68 des zweiten Zinkens 62 trotzdem den Abstand zwischen den Anfangsabschnitten 65 und 67 der beiden Zinken 61 und 62 in Richtung der Wicklungsachse 6C zu überbrücken, ist in der Vorderansicht der Winkel α zwischen dem Endabschnitt 68 des zweiten Zinkens 62 und dem Endabschnitt 66 des ersten Zinkens 61 entsprechend größer als bei der ersten Ausführungsform. Dies ist dadurch bedingt, dass die Krümmung des zweiten Zinkens 62 auf den ersten Zinken 61 zu sowohl in Bezug auf die Vorderansicht, als auch in Bezug auf die Seitenansicht in einem einzigen relativ kurzen Krümmungsabschnitt 69 erfolgt und dieser Krümmungsabschnitt 69 im Hinblick auf die für die Seitenansicht beabsichtigte Form relativ weit von der Wicklung 63 entfernt liegen muss, so dass der auf den Krümmungsabschnitt 69 folgende freie Endabschnitt 68 des Zinkens 62 deutlich kürzer ist als sein Anfangsabschnitt 67.

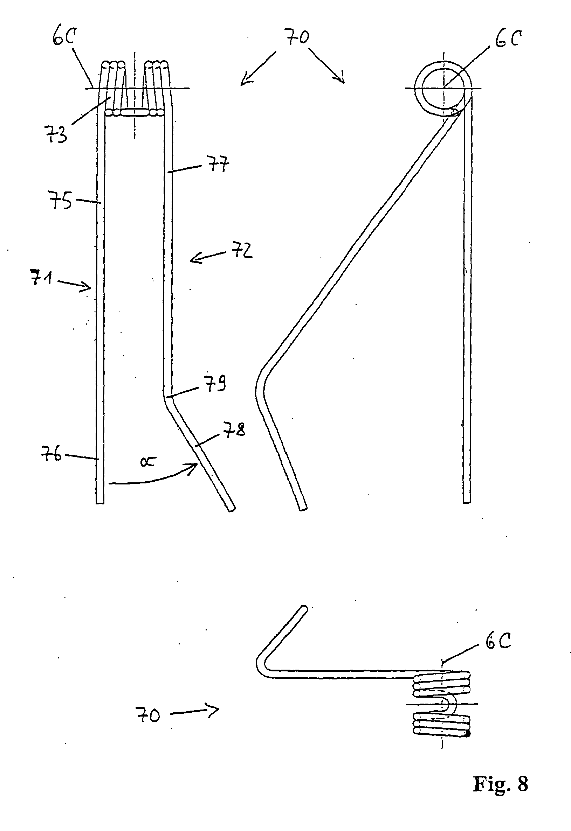

Eine sechste Ausführungsform eines erfindungsgemäßen Doppelzinkens 70 ist in Fig. 8 dargestellt. Diese Ausführungsform unterscheidet sich von der fünften lediglich dadurch, dass in der Vorderansicht links oben die Krümmung des zweiten Zinkens 72 im Krümmungsabschnitt 79 eine entgegen gesetzte Richtung hat, so dass der freie Endabschnitt 78 des zweiten Zinkens 72 nicht auf den freien Endabschnitt 76 des ersten Zinkens 71 zu, sondern von diesem weg gerichtet ist. Auch bei dieser Ausführungsform können durch den schräg verlaufenden freien Endabschnitt 78 des zweiten Zinkens 72 Halme, die nahezu senkrecht zum Boden liegen, erfasst werden.

Wie Fig. 8 erkennen lässt, ist bei der sechsten Ausführungsform der Winkel α der Schrägstellung des freien Endabschnitts 78 des zweiten Zinkens 72 in der Vorderansicht genau so groß wie bei der fünften Ausführungsform, hat aber die entgegen gesetzte Richtung, und der Abstand der Enden der freien Endabschnitte 76 und 78 der beiden Zinken 71 und 72 beträgt ungefähr das Doppelte des Abstandes der Anfangsabschnitte 75 und 77. Somit entspricht auch hier die Entfernung des Endes des freien Endabschnitts 78 von dem Anfangsabschnitt 77 in Richtung der Längsachse 6C der Wicklung 73 etwa dem Abstand der beiden Anfangsabschnitte 75 und 77 der beiden Zinken 71 und 22.

Für die in den Figuren 4 bis 8 gezeigten Ausführungsformen gilt die zuvor anhand der Ausführungsform von Fig. 3 getroffene Aussage, dass das Merkmal der Schrägstellung des Endabschnitts in der Vorderansicht zwischen den beiden Zinken eines Doppelzinkes austauschbar ist, und auch bei beiden Zinken verwirklicht sein könnte, gleichermaßen wie für die Ausführungsform von Fig. 3. Es kommt also bei sämtlichen Ausführungsformen nur darauf an, dass die Endabschnitte in der Vorderansicht nicht parallel zueinander liegen.

Die Erfindung wurde vorausgehend anhand verschiedener Ausführungsformen eines Doppelzinkens erläutert. Durch die Montage einer Vielzahl solcher Doppelzinken in einer Reihe entlang des Außenabschnitts 6B eines Zinkenträgers 6A, 6B ergibt sich ein erfindungsgemäßer Rechen 5 für einen Arbeitskreisel 1 einer Heuwerbungsmaschine. Dabei ist ein Richtwert für einen sinnvollen Abstand zwischen den einzelnen Doppelzinken durch deren Breite in der Vorderansicht, d.h. durch die Länge der Wicklung eines Doppelzinkens in Richtung der Achse 6C gegeben. Um mit den schräg gestellten freien Endabschnitten der zweiten Zinkengruppe 7B den gesamten Arbeitsbereich eines Arbeitskreisels 1 zu überstreichen, können die einzelnen Rechen 5 eines Arbeitskreisels 1 in dessen Radialrichtung gegeneinander versetzt angeordnet werden, was beispielsweise durch eine Variation der Länge der Zinkenträger 6A, 6B, oder durch eine Variation der Einstecktiefe des Innenabschnitts 6A in dem Getriebe 8 erreicht werden kann. Es könnte zu diesem Zweck aber auch bei gleicher Länge und Einstecktiefe der Zinkenträger 6A, 6B die Position der Zinken 7 auf den Außenabschnitten 6B zwischen den verschiedenen Rechen 5 durch einen jeweiligen Versatz in Richtung der Achse 6C variiert werden. Eine weitere Möglichkeit bestünde darin, auf verschiedenen Rechen 5 verschiedene Zinken 7 mit unterschiedlichem Winkel α der zweiten Zinkengruppe 7B zu montieren.

Ein erfindungsgemäßer Rechen ließe sich auch dadurch realisieren, dass zwei verschiedene Arten von separaten Einzelzinken abwechselnd in einer Reihe entlang des Außenabschnitts 6B eines Zinkenträgers 6A, 6B montiert werden. Wenngleich die Ausbildung der beiden verschiedenen Arten von Zinken 7 eines erfindungsgemäßen Rechens 5 in Form einteiliger Doppelzinken der vorausgehend beschriebenen Art besonders vorteilhaft ist, so stellt auch die alternative Realisierung mit verschiedenartigen Einzelzinken eine mögliche Ausführungsform der vorliegenden Erfindung dar.

Es versteht sich, dass für einen Fachmann in Anbetracht der vorgestellten Ausführungsbeispiele eine Vielzahl von Variationsmöglichkeiten, insbesondere solche, bei denen einzelne Merkmale verschiedener Ausführungsbeispiele miteinander kombiniert werden, gegeben sind. Solche Variationen der Erfindung liegen im fachmännischen Ermessen und sollen vom Schutz der Patentansprüche umfasst sein. Entscheidend ist jeweils nur, dass bei einem Rechen zwei verschiedene Zinkengruppen vorhanden sind, deren für den Eingriff mit dem zu sammelnden Halmgut wirksame freie Endabschnitte nicht parallel, sondern zumindest in der Vorderansicht schräg zueinander stehen bzw. dass bei einem Doppelzinken die freien Endabschnitte der beiden einstückig kombinierten Zinken nicht parallel, sondern zumindest in der Vorderansicht schräg zueinander stehen. Das Ausmaß der Schrägstellung, d.h. der genaue Winkel zwischen den Endabschnitten der beiden Zinkengruppen eines Rechens bzw. Zinken eines Doppelzinkens liegt im fachmännischen Ermessen.

## Patentansprüche

1. Rechen für eine Heuwerbungsmaschine, mit einer Vielzahl von an einem Zinkenträger befestigten Federzinken, wobei zwei Gruppen von Zinken entlang eines Außenabschnitts des Zinkenträgers jeweils in einer Reihe nebeneinander angeordnet und dabei so in Richtung der Längsachse des Außenabschnitts des Zinkenträgers gegeneinander versetzt sind, dass von jeweils zwei unmittelbar benachbarten Zinken jeder einer anderen der beiden verschiedenen Zinkengruppen angehört, und wobei die Zinken der zweiten Gruppe so geformt und ausgerichtet sind, dass zumindest ihre freien Endabschnitte von den freien Endabschnitten der Zinken der ersten Gruppe einen Abstand in Bezug auf die Umfangsrichtung eines um die Längsachse des Außenabschnitts des Zinkenträgers verlaufenden Kreises aufweisen, **dadurch gekennzeichnet, dass** bei zumindest einer der beiden Zinkengruppen (7A, 7B) zumindest die freien Endabschnitte (28; 38; 48; 58; 68; 78) der Zinken (22; 32; 42; 52; 62; 72) so ausgerichtet sind, dass in einer zwischen den beiden Zinkengruppen (7A, 7B) und parallel zur Längsachse (6C) des Außenabschnitts (6B) des Zinkenträgers (6A, 6B) liegenden ersten Ebene ihre Projektionen schräg zu den Projektionen der freien Endabschnitte (26; 36; 46; 56; 66; 76) der jeweils anderen Zinkengruppe (7A) verlaufen.

2. Rechen nach Anspruch 1, **dadurch gekennzeichnet, dass** die Zinken der ersten Zinkengruppe (7A) so geformt und ausgerichtet sind, dass zumindest ihre freien Endabschnitte (26; 36; 46; 56; 66; 76) annähernd parallel zueinander und annähernd senkrecht zu einer Längsachse (6C) des Außenabschnitts (6B) des Zinkenträgers verlaufen, und dass bei der zweiten Zinkengruppe (7B) zumindest die freien Endabschnitte (28; 38; 48; 58; 68; 78) der Zinken (22; 32; 42; 52; 62; 72) so ausgerichtet sind, dass in der ersten Ebene ihre Projektionen schräg zu den Projektionen der freien Endabschnitte (26; 36; 46; 56; 66; 76) der ersten Zinkengruppe (7A) verlaufen.

3. Rechen nach Anspruch 1 oder 2, **dadurch gekennzeichnet, dass** die Zinken (22; 32; 42; 52; 62 72) der zweiten Gruppe (7B) gegenüber denjenigen (21; 31; 41; 51; 61; 71) der ersten Gruppe (7A) in ihren jeweiligen Anfangsabschnitten (25, 27; 35, 37; 45, 47; 55, 57; 65, 67; 75, 77), die von dem Außenabschnitt (6B) des Zinkenträgers (6A, 6B) ausgehen, in Richtung der Längsachse (6C) des Außenabschnitts (6B) des Zinkenträgers (6A, 6B) versetzt sind, und dass in der ersten Ebene der Winkel α zwischen den Projektionen der freien Endabschnitte (28; 38; 48; 58; 68; 78) der zweiten Zinkengruppe (7B) und denjenigen (26; 36; 46; 56; 66; 76) der ersten Zinkengruppe (7A) so groß ist, dass die Erstreckung der schräg verlaufenden Endabschnitte (28; 38; 48; 58; 68; 78) der Zinken (22; 32; 42; 52; 62; 72) zumindest einer der beiden Zinkengruppen (7A, 7B) in Richtung der Längsachse (6C) des Außenabschnitts (6B) des Zinkenträgers (6A, 6B) dem Abstand zwischen einem Anfangsabschnitt (25; 35; 45; 55; 65; 75) eines Zinkens (21; 31; 41; 51; 61; 71) der ersten Gruppe (7A) und dem Anfangsabschnitt (27; 37; 47; 57; 67; 77) des nächstliegenden Zinkens (22; 32; 42; 52; 62; 72) der zweiten Gruppe (7B) zumindest annähernd entspricht oder ihn überschreitet.

4. Rechen nach einem der Ansprüche 1 bis 3, **dadurch gekennzeichnet, dass** in der ersten Ebene der Winkel α zwischen den Projektionen der freien Endabschnitte (28; 38; 48; 58; 68; 78) der zweiten Zinkengruppe (7B) und denjenigen (26; 36; 46; 56; 66; 76) der ersten Zinkengruppe (7A) mindestens 10° beträgt.

5. Rechen nach einem der Ansprüche 1 bis 4, **dadurch gekennzeichnet, dass** in der ersten Ebene der Winkel α zwischen den Projektionen der freien Endabschnitte (28; 38; 48; 58; 68; 78) der zweiten Zinkengruppe (7B) und denjenigen (26; 36; 46; 56; 66; 76) der ersten Zinkengruppe (7A) höchstens 80° beträgt.

6. Rechen nach einem der Ansprüche 1 bis 5, **dadurch gekennzeichnet, dass** die Zinken (22; 32; 42; 52; 62; 72) der zweiten Zinkengruppe (7B) jeweils einen zwischen einem Anfangsabschnitt (27; 37; 47; 57; 67; 77) und dem freien Endabschnitt (28; 38; 48; 58; 68; 78) liegenden Krümmungsabschnitt (29; 39; 49; 59; 69; 79) aufweisen, und dass durch eine Krümmung in dem Krümmungsabschnitt (29; 39; 49; 59; 69; 79) ein schräger Verlauf der Projektionen ihrer freien Endabschnitte (28; 38; 48; 58; 68; 78) zu den Projektionen der freien Endabschnitte (26; 36; 46; 56; 66; 76) der ersten Zinkengruppe (7A) in der ersten Ebene bewirkt wird.

7. Rechen nach Anspruch 6, **dadurch gekennzeichnet, dass** die Projektionen der Anfangsabschnitte (25, 27; 35, 37; 45, 47; 55, 57; 65, 67; 75, 77) der Zinken der beiden Zinkengruppen (7A, 7B) in der ersten Ebene annähernd parallel zueinander verlaufen.

8. Rechen nach einem der Anspruch 6 oder 7, **dadurch gekennzeichnet, dass** in einer senkrecht zur Längsachse des Außenabschnitts (6B) des Zinkenträgers (6A, 6B) liegenden zweiten Ebene die Projektionen der Anfangsabschnitte (27; 37; 47; 57; 67; 77) der zweiten Zinkengruppe (7B) schräg zu den Projektionen der Anfangsabschnitte (25; 35; 45; 55; 65; 75) der ersten Zinkengruppe (7A) verlaufen, und dass die Zinken (22; 32; 42; 52; 62; 72) der zweiten Gruppe (7B) in dem Krümmungsabschnitt (29; 39; 49; 59; 69; 79) so gekrümmt sind, dass in der zweiten Ebene der Winkel zwischen den Projektionen ihrer Endabschnitte (28; 38; 48; 58; 68; 78) und den Projektionen der Endabschnitte (26; 36; 46; 56; 66; 76) der ersten Zinkengruppe (7A) geringer ist als der Winkel zwischen den Projektionen der Anfangsabschnitte (25, 27; 35, 37; 45, 47; 55, 57; 65, 67; 75, 77) der beiden Zinkengruppen (7A, 7B) oder im Vergleich zu diesem eine entgegen gesetzte Richtung hat.

9. Rechen nach einem der Ansprüche 6 bis 8, **dadurch gekennzeichnet, dass** der Anfangsabschnitt (27; 37; 47; 57; 67; 77) und der Endabschnitt (28; 38; 48; 58; 68; 78) eines Zinkens (22; 32; 42; 52; 62; 72) der zweiten Gruppe (7B) jeweils annähernd geradlinig verlaufen.

10. Rechen nach einem der Ansprüche 6 bis 8 **dadurch gekennzeichnet, dass** der Krümmungsabschnitt (29; 39; 49; 59; 69; 79) eines Zinkens (22; 32; 42; 52; 62; 72) der zweiten Gruppe (7B) fließend in dessen Endabschnitt (28; 38; 48; 58; 68; 78) übergeht, so dass letzterer ebenfalls gekrümmt verläuft.

11. Rechen nach einem der Ansprüche 1 bis 10, **dadurch gekennzeichnet, dass** die erste Zinkengruppe (7A) in Bezug auf die Bewegungsrichtung des Rechens 5 beim Betrieb in einer Heuwerbungsmaschine gegenüber der zweiten Zinkengruppe (7B) eine voreilende Position hat.

12. Rechen nach einem der Ansprüche 1 bis 11, **dadurch gekennzeichnet, dass** jeweils ein Zinken (21; 31; 41; 51; 61; 71) der ersten Gruppe (7A) und ein Zinken (22; 32; 42; 52; 62; 72) der zweiten Gruppe (7B) als einteiliger Doppelzinken (20; 30; 40; 50; 60; 70) ausgebildet sind und in einer Wicklung (23; 33; 43; 53; 63; 73) ineinander übergehen, an welcher der Doppelzinken (20; 30; 40; 50; 60; 70) mit dem Außenabschnitt (6B) des Zinkenträgers (6A, 6B) verbindbar ist.

13. Doppelzinken für einen Rechen einer Heuwerbungsmaschine, mit einer an einem Zinkenträger befestigbaren Wicklung und zwei von den beiden Enden der Wicklung abragenden Federzinken, wobei der zweite Zinken so geformt und ausgerichtet ist, dass zumindest sein freier Endabschnitt von dem freien Endabschnitt des ersten Zinkens einen Abstand in Bezug auf die Umfangsrichtung eines um die Längsachse der Wicklung verlaufenden Kreises aufweist, und wobei zumindest der freie Endabschnitt (28; 38; 48; 58; 68; 78) eines der beiden Zinken (21, 22; 31, 32; 41, 42; 51, 52; 61, 62; 71,) so ausgerichtet ist, dass in einer zwischen den beiden Zinken (21, 22; 31, 32; 41, 42; 51, 52; 61, 62; 71, 72) und parallel zur Längsachse (6C) der Wicklung (23; 33; 43; 53; 63; 73) liegenden ersten Ebene seine Projektion schräg zu der Projektion des freien Endabschnitts (26; 36; 46; 56; 66; 76) des anderen Zinkens (21; 31; 41; 51; 61; 71) verläuft, **dadurch gekennzeichnet, dass** in der ersten Ebene der Winkel zwischen den Projektionen des freien Endabschnitts (28; 38; 48; 58; 68; 78) des zweiten Zinkens (22; 32; 42; 52; 62; 72) und desjenigen (26; 36; 46; 56; 66; 76) des ersten Zinkens (21; 31; 41; 51; 61; 71) so groß ist, dass die Erstreckung des schräg verlaufenden Endabschnitts (28; 38; 48; 58; 68; 78) eines der beiden Zinken (21, 22; 31, 32; 41, 42; 51, 52; 61, 62; 71, 72) in Richtung der Längsachse (6C) der Wicklung (23; 33; 43; 53; 63; 73) der Länge der Wicklung (23; 33; 43; 53; 63; 73) zumindest annähernd entspricht oder sie überschreitet.

14. Doppelzinken nach Anspruch 13, **dadurch gekennzeichnet, dass** der erste der beiden Zinken so geformt und ausgerichtet ist, dass zumindest sein freier Endabschnitt annähernd senkrecht zu der Längsachse der Wicklung (23; 33; 43; 53; 63; 73) verläuft, und dass der freie Endabschnitt (28; 38; 48; 58; 68; 78) des zweiten Zinkens (22; 32; 42; 52; 62; 72) so ausgerichtet ist, dass in einer zwischen den beiden Zinken (21, 22; 31, 32; 41, 42; 51, 52; 61, 62; 71, 72) und parallel zur Längsachse (6C) der Wicklung (23; 33; 43; 53; 63; 73) liegenden ersten Ebene seine Projektion schräg zu der Projektion des freien Endabschnitts (26; 36; 46; 56; 66; 76) des ersten Zinkens (21; 31; 41; 51; 61; 71) verläuft.

15. Doppelzinken nach Anspruch 13 oder 14, **dadurch gekennzeichnet, dass** in der ersten Ebene der Winkel α zwischen den Projektionen des freien Endabschnitts (28; 38; 48; 58; 68; 78) des zweiten Zinkens (22; 32; 42; 52; 62; 72) und demjenigen (26; 36; 46; 56; 66; 76) des ersten Zinkens (21; 31; 41; 51; 61; 71) mindestens 10° beträgt.

16. Doppelzinken nach einem der Ansprüche 13 bis 15, **dadurch gekennzeichnet, dass** in der ersten Ebene der Winkel α zwischen der Projektion des freien Endabschnitts (28; 38; 48; 58; 68; 78) des zweiten Zinkens (22; 32; 42; 52; 62; 72) und demjenigen (26; 36; 46; 56; 66; 76) des ersten Zinkens (21; 31; 41; 51; 61; 71) höchstens 80° beträgt.

17. Doppelzinken nach einem der Ansprüche 13 bis 16, **dadurch gekennzeichnet, dass** der zweite Zinken (22; 32; 42; 52; 62; 72) einen der Wicklung (23; 33; 43; 53; 63; 73) benachbarten Anfangsabschnitt (27; 37; 47; 57; 67; 77) und einen zwischen diesem und dem freien Endabschnitt (28; 38; 48; 58; 68; 78) liegenden Krümmungsabschnitt (29; 39; 49; 59; 69; 79) aufweist, und dass durch eine Krümmung in dem Krümmungsabschnitt (29; 39; 49; 59; 69; 79) ein schräger Verlauf der Projektion seines freien Endabschnitts (28; 38; 48; 58; 68; 78) zu der Projektion des freien Endabschnitts (26; 36; 46; 56; 66; 76) des ersten Zinkens (21; 31; 41; 51; 61; 71) in der ersten Ebene bewirkt wird.

18. Doppelzinken nach Anspruch 17, **dadurch gekennzeichnet, dass** die Projektionen der Anfangsabschnitte (25, 27; 35, 37; 45, 47; 55, 57; 65, 67; 75, 77) beider Zinken (21, 22; 31, 32; 41, 42; 51, 52; 61, 62; 71, 72) in der ersten Ebene annähernd parallel zueinander verlaufen.

19. Doppelzinken nach Anspruch 17 oder 18, **dadurch gekennzeichnet, dass** in einer senkrecht zur Längsachse (6C) der Wicklung (23; 33; 43; 53; 63; 73) liegenden zweiten Ebene die Projektion des Anfangsabschnitts (27; 37; 47; 57; 67; 77) des zweiten Zinkens (22; 32; 42; 52; 62; 72) schräg zu der Projektion des Anfangsabschnitts (25; 35; 45; 55; 65; 75) des ersten Zinkens (21; 31; 41; 51; 61; 71) verläuft, und dass der zweite Zinken (22; 32; 42; 52; 62; 72) in dem Krümmungsabschnitt (29; 39; 49; 59; 69; 79) so gekrümmt ist, dass in der zweiten Ebene der Winkel zwischen der Projektion seines Endabschnitts (28; 38; 48; 58; 68; 78) und der Projektion des Endabschnitts (26; 36; 46; 56; 66; 76) des ersten Zinkens (21; 31; 41; 51; 61; 71) geringer ist als der Winkel zwischen den Projektionen der Anfangsabschnitte (25, 27; 35, 37; 45, 47; 55, 57; 65, 67; 75, 77) der beiden Zinken (21, 22; 31, 32; 41, 42; 51, 52; 61, 62; 71, 72) oder im Vergleich zu diesem eine entgegen gesetzte Richtung hat.

20. Doppelzinken nach einem der Ansprüche 17 bis 19, **dadurch gekennzeichnet, dass** der Anfangsabschnitt (27; 37; 47; 57; 67; 77) und der Endabschnitt (28; 38; 48; 58; 68; 78) des zweiten Zinkens (22; 32; 42; 52; 62; 72) jeweils annähernd geradlinig verlaufen.

21. Doppelzinken nach einem der Ansprüche 17 bis 19, **dadurch gekennzeichnet, dass** der Krümmungsabschnitt (29; 39; 49; 59; 69; 79) des zweiten Zinkens (22; 32; 42; 52; 62; 72) fließend in dessen Endabschnitt (28; 38; 48; 58; 68; 78) übergeht, so dass letzterer ebenfalls gekrümmt verläuft.

22. Doppelzinken nach einem der Ansprüche 13 bis 21, **dadurch gekennzeichnet, dass** der erste Zinken (21; 31; 41; 51; 61; 71) in Bezug auf die Bewegungsrichtung des Doppelzinkens (20; 30; 40; 50; 60; 70) beim Betrieb in einer Heuwerbungsmaschine gegenüber dem zweiten Zinken (22; 32; 42; 52; 62; 72) eine voreilende Position hat.

## Claims

1. Rake for a haymaking machine, with a large number of spring tines fastened to a tine carrier, two groups of tines being arranged along an outer portion of the tine carrier in each case in a row next to one another and thus offset from one another in the direction of the longitudinal axis of the outer portion of the tine carrier in such a way that of two respective directly adjacent tines each pertains to a different one of the two different tine groups, and the tines of the second group being shaped and oriented in such a way that at least their free end portions are at a distance from the free end portions of the tines of the first group in relation to the circumferential direction of a circle extending about the longitudinal axis of the outer portion of the tine carrier, **characterised in that** in at least one of the two tine groups (7A, 7B) at least the free end portions (28; 38; 48; 58; 68; 78) of the tines (22; 32; 42; 52; 62; 72) are oriented in such a way that in a first plane lying between the two tine groups (7A, 7B) and parallel to the longitudinal axis (6C) of the outer portion (6B) of the tine carrier (6A, 6B) their projections extend obliquely to the projections of the free end portions (26; 36; 46; 56; 66; 76) of the other respective tine group (7A).

2. Rake according to claim 1, **characterised in that** the tines of the first tine group (7A) are shaped and oriented in such a way that at least their free end portions (26; 36; 46; 56; 66; 76) extend approximately parallel to one another and approximately perpendicularly to a longitudinal axis (6C) of the outer portion (6B) of the tine carrier, and **in that** in the second tine group (7B) at least the free end portions (28; 38; 48; 58; 68; 78) of the tines (22; 32; 42; 52; 62; 72) are oriented in such a way that in the first plane their projections extend obliquely to the projections of the free end portions (26; 36; 46; 56; 66; 76) of the first tine group (7A).

3. Rake according to claim 1 or 2, **characterised in that** the tines (22; 32; 42; 52; 62; 72) of the second group (7B) are offset relative to those (21; 31; 41; 51; 61; 71) of the first group (7A) in their respective start portions (25, 27; 35, 37; 45, 47; 55, 57; 65, 67; 75, 77), which start from the outer portion (6B) of the tine carrier (6A, 6B), in the direction of the longitudinal axis (6C) of the outer portion (6B) of the tine carrier (6A, 6B), and **in that** in the first plane the angle α between the projections of the free end portions (28; 38; 48; 58; 68; 78) of the second tine group (7B) and those (26; 36; 46; 56; 66; 76) of the first tine group (7A) is so large that the extension of the obliquely extending end portions (28; 38; 48; 58; 68; 78) of the tines (22; 32; 42; 52; 62; 72) of at least one of the two tine groups (7A, 7B) in the direction of the longitudinal axis (6C) of the outer portion (6B) of the tine carrier (6A, 6B) at least approximately corresponds to or exceeds the distance between a start portion (25; 35; 45; 55; 65; 75) of a tine (21; 31; 41; 51; 61; 71) of the first group (7A) and the start portion (27; 37; 47; 57; 67; 77) of the closest tine (22; 32; 42; 52; 62; 72) of the second group (7B).

4. Rake according to one of claims 1 to 3, **characterised in that** in the first plane the angle α between the projections of the free end portions (28; 38; 48; 58; 68; 78) of the second tine group (7B) and those (26; 36; 46; 56; 66; 76) of the first tine group (7A) is at least 10°.

5. Rake according to one of claims 1 to 4, **characterised in that** in the first plane the angle α between the projections of the free end portions (28; 38; 48; 58; 68; 78) of the second tine group (7B) and those (26; 36; 46; 56; 66; 76) of the first tine group (7A) is at most 80°.

6. Rake according to one of claims 1 to 5, **characterised in that** the tines (22; 32; 42; 52; 62; 72) of the second tine group (7B) each have a curvature portion (29; 39; 49; 59; 69; 79) lying between a start portion (27; 37; 47; 57; 67; 77) and the free end portion (28; 38; 48; 58; 68; 78), and **in that** a curvature in the curvature portion (29; 39; 49; 59; 69; 79) causes an oblique course of the projections of their free end portions (28; 38; 48; 58; 68; 78) relative to the projections of the free end portions (26; 36; 46; 56; 66; 76) of the first tine group (7A) in the first plane.

7. Rake according to claim 6, **characterised in that** the projections of the start portions (25, 27; 35, 37; 45, 47; 55, 57; 65, 67; 75, 77) of the tines of the two tine groups (7A, 7B) extend approximately parallel to one another in the first plane.

8. Rake according to one of claims 6 or 7, **characterised in that** in a second plane lying perpendicularly to the longitudinal axis of the outer portion (6B) of the tine carrier (6A, 6B) the projections of the start portions (27; 37; 47; 57; 67; 77) of the second tine group (7B) extend obliquely to the projections of the start portions (25; 35; 45; 55; 65; 75) of the first tine group (7A), and **in that** the tines (22; 32; 42; 52; 62; 72) of the second group (7B) are curved in the curvature portion (29; 39; 49; 59; 69; 79) in such a way that in the second plane the angle between the projections of their end portions (28; 38; 48; 58; 68; 78) and the projections of the end portions (26; 36; 46; 56; 66; 76) of the first tine group (7A) is smaller than the angle between the projections of the start portions (25, 27; 35, 37; 45, 47; 55, 57; 65, 67; 75, 77) of the two tine groups (7A, 7B) or has an opposite direction compared thereto.

9. Rake according to one of claims 6 to 8, **characterised in that** the start portion (27; 37; 47; 57; 67; 77) and the end portion (28; 38; 48; 58; 68; 78) of a tine (22; 32; 42; 52; 62; 72) of the second group (7B) each extend approximately rectilinearly.

10. Rake according to one of claims 6 to 8, **characterised in that** the curvature portion (29; 39; 49; 59; 69; 79) of a tine (22; 32; 42; 52; 62; 72) of the second group (7B) merges seamlessly with the end portion (28; 38; 48; 58; 68; 78) thereof, so that said end portion also extends in a curved manner.

11. Rake according to one of claims 1 to 10, **characterised in that** the first tine group (7A) has, in relation to the direction of movement of the rake (5) during operation in a haymaking machine, an advancing position relative to the second tine group (7B).

12. Rake according to one of claims 1 to 11, **characterised in that** a respective tine (21; 31; 41; 51; 61; 71) of the first group (7A) and a tine (22; 32; 42; 52; 62; 72) of the second group (7B) are embodied as a one-piece double tine (20; 30; 40; 50; 60; 70) and merge with each other in a winding (23; 33; 43; 53; 63; 73) to which the double tine (20; 30; 40; 50; 60; 70) can be connected with the outer portion (6B) of the tine carrier (6A, 6B).

13. Double tine for a rake of a haymaking machine, with a winding which can be fastened to a tine carrier and two spring tines protruding from the two ends of the winding, the second tine being shaped and oriented in such a way that at least its free end portion is at a distance from the free end portion of the first tine in relation to the circumferential direction of a circle extending about the longitudinal axis of the winding, and at least the free end portion (28; 38; 48; 58; 68; 78) of one of the two tines (21, 22; 31, 32; 41, 42; 51, 52; 61, 62; 71, 72) being oriented in such a way that in a first plane lying between the two tines (21, 22; 31, 32; 41, 42; 51, 52; 61, 62; 71, 72) and parallel to the longitudinal axis (6C) of the winding (23; 33; 43; 53; 63; 73) its projection extends obliquely to the projection of the free end portion (26; 36; 46; 56; 66; 76) of the other tine (21; 31; 41; 51; 61; 71), **characterised in that** in the first plane the angle between the projections of the free end portion (28; 38; 48; 58; 68; 78) of the second tine (22; 32; 42; 52; 62; 72) and that (26; 36; 46; 56; 66; 76) of the first tine (21; 31; 41; 51; 61; 71) is so large that the extension of the obliquely extending end portion (28; 38; 48; 58; 68; 78) of one of the two tines (21, 22; 31, 32; 41, 42; 51, 52; 61, 62; 71, 72) in the direction of the longitudinal axis (6C) of the winding (23; 33; 43; 53; 63; 73) at least approximately corresponds to or exceeds the length of the winding (23; 33; 43; 53; 63; 73).

14. Double tine according to claim 13, **characterised in that** the first of the two tines is shaped and oriented in such a way that at least its free end portion extends approximately perpendicularly to the longitudinal axis of the winding (23; 33; 43; 53; 63; 73), and **in that** the free end portion (28; 38; 48; 58; 68; 78) of the second tine (22; 32; 42; 52; 62; 72) is oriented in such a way that in a first plane lying between the two tines (21, 22; 31, 32; 41, 42; 51, 52; 61, 62; 71, 72) and parallel to the longitudinal axis (6C) of the winding (23; 33; 43; 53; 63; 73) its projection extends obliquely to the projection of the free end portion (26; 36; 46; 56; 66; 76) of the first tine (21; 31; 41; 51; 61; 71).

15. Double tine according to claim 13 or 14, **characterised in that** in the first plane the angle α between the projections of the free end portion (28; 38; 48; 58; 68; 78) of the second tine (22; 32; 42; 52; 62; 72) and that (26; 36; 46; 56; 66; 76) of the first tine (21; 31; 41; 51; 61; 71) is at least 10°.

16. Double tine according to one of claims 13 to 15, **characterised in that** in the first plane the angle α between the projection of the free end portion (28; 38; 48; 58; 68; 78) of the second tine (22; 32; 42; 52; 62; 72) and that (26; 36; 46; 56; 66; 76) of the first tine (21; 31; 41; 51; 61; 71) is at most 80°.

17. Double tine according to one of claims 13 to 16, **characterised in that** the second tine (22; 32; 42; 52; 62; 72) has a start portion (27; 37; 47; 57; 67; 77) adjacent to the winding (23; 33; 43; 53; 63; 73) and a curvature portion (29; 39; 49; 59; 69; 79) lying between said start portion and the free end portion (28; 38; 48; 58; 68; 78), and **in that** a curvature in the curvature portion (29; 39; 49; 59; 69; 79) causes an oblique course of the projection of its free end portion (28; 38; 48; 58; 68; 78) relative to the projection of the free end portion (26; 36; 46; 56; 66; 76) of the first tine (21; 31; 41; 51; 61; 71) in the first plane.

18. Double tine according to claim 17, **characterised in that** the projections of the start portions (25, 27; 35, 37; 45, 47; 55, 57; 65, 67; 75, 77) of both tines (21, 22; 31, 32; 41, 42; 51, 52; 61, 62; 71, 72) extend approximately parallel to one another in the first plane.

19. Double tine according to claim 17 or 18, **characterised in that** in a second plane lying perpendicularly to the longitudinal axis (6C) of the winding (23; 33; 43; 53; 63; 73) the projection of the start portion (27; 37; 47; 57; 67; 77) of the second tine (22; 32; 42; 52; 62; 72) extends obliquely to the projection of the start portion (25; 35; 45; 55; 65; 75) of the first tine (21; 31; 41; 51; 61; 71), and **in that** the second tine (22; 32; 42; 52; 62; 72) is curved in the curvature portion (29; 39; 49; 59; 69; 79) in such a way that in the second plane the angle between the projection of its end portion (28; 38; 48; 58; 68; 78) and the projection of the end portion (26; 36; 46; 56; 66; 76) of the first tine (21; 31; 41; 51; 61; 71) is smaller than the angle between the projections of the start portions (25, 27; 35, 37; 45, 47; 55, 57; 65, 67; 75, 77) of the two tines (21, 22; 31, 32; 41, 42; 51, 52; 61, 62; 71, 72) or has an opposite direction compared thereto.

20. Double tine according to one of claims 17 to 19, **characterised in that** the start portion (27; 37; 47; 57; 67; 77) and the end portion (28; 38; 48; 58; 68; 78) of the second tine (22; 32; 42; 52; 62; 72) each extend approximately rectilinearly.

21. Double tine according to one of claims 17 to 19, **characterised in that** the curvature portion (29; 39; 49; 59; 69; 79) of the second tine (22; 32; 42; 52; 62; 72) merges seamlessly with the end portion (28; 38; 48; 58; 68; 78) thereof, so that said end portion also extends in a curved manner.

22. Double tine according to one of claims 13 to 21, **characterised in that** the first tine (21; 31; 41; 51; 61; 71) has, in relation to the direction of movement of the double tine (20; 30; 40; 50; 60; 70) during operation in a haymaking machine, an advancing position relative to the second tine (22; 32; 42; 52; 62; 72).

## Revendications

1. Râteau pour une machine de fenaison, avec une pluralité de dents flexibles fixées sur un porte-dents, sachant que deux groupes de dents sont disposés en juxtaposition, chacun en une rangée, le long d'une partie extérieure du porte-dents, et sont ce faisant mutuellement décalés dans la direction de l'axe longitudinal de la partie extérieure du porte-dents de telle sorte que, parmi deux dents immédiatement voisines, chacune d'entre elles fait chaque fois partie de l'un des deux groupes de dents différents, et sachant que les dents du deuxième groupe possèdent une forme et une orientation telles qu'au moins leurs parties terminales libres présentent, par rapport aux parties terminales libres des dents du premier groupe, une distance dans la direction circonférentielle d'un cercle s'étendant autour de l'axe longitudinal de la partie extérieure du porte-dents, **caractérisé en ce que**, pour au moins un des deux groupes de dents (7A, 7B), au moins les parties terminales libres (28 ; 38 ; 48 ; 58 ; 68 ; 78) des dents (22 ; 32 ; 42 ; 52 ; 62 ; 72) sont orientées de telle sorte que, dans un premier plan situé entre les deux groupes de dents (7A, 7B) et parallèlement à l'axe longitudinal (6C) de la partie extérieure (6B) du porte-dents (6A, 6B), leurs projections s'étendent en oblique par rapport aux projections des parties terminales libres (26 ; 36 ; 46 ; 56 ; 66 ; 76) de l'autre groupe de dents respectif (7A).

2. Râteau selon la revendication 1, **caractérisé en ce que** les dents du premier groupe de dents (7A) possèdent une forme et une orientation telles qu'au moins leurs parties terminales libres (26 ; 36 ; 46 ; 56 ; 66 ; 76) s'étendent environ parallèlement entre elles et environ perpendiculairement à un axe longitudinal (6C) de la partie extérieure (6B) du porte-dents, et **en ce que**, pour le deuxième groupe de dents (7B), au moins les parties terminales libres (28 ; 38 ; 48 ; 58 ; 68 ; 78) des dents (22 ; 32 ; 42 ; 52 ; 62 ; 72) sont orientées de telle sorte que, dans le premier plan, leurs projections s'étendent en oblique par rapport aux projections des parties terminales libres (26 ; 36 ; 46 ; 56 ; 66 ; 76) du premier groupe de dents (7A).

3. Râteau selon la revendication 1 ou 2, **caractérisé en ce que** les dents (22 ; 32 ; 42 ; 52 ; 62 ; 72) du deuxième groupe (7B) sont, par rapport à celles (21 ; 31 ; 41 ; 51 ; 61 ; 71) du premier groupe (7A), dans leurs parties initiales respectives (25, 27 ; 35, 37 ; 45, 47 ; 55, 57 ; 65, 67 ; 75, 77) qui partent de la partie extérieure (6B) du porte-dents (6A, 6B), décalées dans la direction de l'axe longitudinal (6C) de la partie extérieure (6B) du porte-dents (6A, 6B) et **en ce que**, dans le premier plan, l'angle α entre les projections des parties terminales libres (28 ; 38 ; 48 ; 58 ; 68 ; 78) du deuxième groupe de dents (7B) et de celles (26 ; 36 ; 46 ; 56 ; 66 ; 76) du premier groupe de dents (7A) est d'une grandeur telle que l'étendue des parties terminales (28 ; 38 ; 48 ; 58 ; 68 ; 78), s'étendant en oblique, des dents (22 ; 32 ; 42 ; 52 ; 62 ; 72) d'au moins un des deux groupes de dents (7A, 7B) dans la direction de l'axe longitudinal (6C) de la partie extérieure (6B) du porte-dents (6A, 6B) est au moins approximativement égale ou supérieure à la distance entre une partie initiale (25 ; 35 ; 45 ; 55 ; 65 ; 75) d'une dent (21 ; 31 ; 41 ; 51 ; 61 ; 71) du premier groupe (7A) et la partie initiale (27 ; 37 ; 47 ; 57 ; 67 ; 77) de la dent la plus proche (22 ; 32 ; 42 ; 52 ; 62 ; 72) du deuxième groupe (7B).

4. Râteau selon l'une des revendications 1 à 3, **caractérisé en ce que**, dans le premier plan, l'angle α entre les projections des parties terminales libres (28 ; 38 ; 48 ; 58 ; 68 ; 78) du deuxième groupe de dents (7B) et de celles (26 ; 36 ; 46 ; 56 ; 66 ; 76) du premier groupe de dents (7A) est au moins égal à 10°.

5. Râteau selon l'une des revendications 1 à 4, **caractérisé en ce que**, dans le premier plan, l'angle α entre les projections des parties terminales libres (28 ; 38 ; 48 ; 58 ; 68 ; 78) du deuxième groupe de dents (7B) et de celles (26 ; 36 ; 46 ; 56 ; 66 ; 76) du premier groupe de dents (7A) est au plus égal à 80°.

6. Râteau selon l'une des revendications 1 à 5, **caractérisé en ce que** les dents (22 ; 32 ; 42 ; 52 ; 62 ; 72) du deuxième groupe de dents (7B) présentent chacune une partie incurvée (29 ; 39 ; 49 ; 59 ; 69 ; 79) située entre une partie initiale (27 ; 37 ; 47 ; 57 ; 67 ; 77) et la partie terminale libre (28 ; 38 ; 48 ; 58 ; 68 ; 78), et **en ce qu'**on produit par l'incurvation de la partie incurvée (29 ; 39 ; 49 ; 59 ; 69 ; 79) l'allure oblique des projections de leurs parties terminales libres (28 ; 38 ; 48 ; 58 ; 68 ; 78) par rapport aux projections des parties terminales libres (26 ; 36 ; 46 ; 56 ; 66 ; 76) du premier groupe de dents (7A) dans le premier plan.

7. Râteau selon la revendication 6, **caractérisé en ce que** les projections des parties initiales (25, 27 ; 35, 37 ; 45, 47 ; 55, 57 ; 65, 67 ; 75, 77) des dents des deux groupes de dents (7A, 7B) dans le premier plan s'étendent environ parallèlement entre elles.

8. Râteau selon la revendication 6 ou 7, **caractérisé en ce que**, dans un deuxième plan situé perpendiculairement à l'axe longitudinal de la partie extérieure (6B) du porte-dents (6A, 6B), les projections des parties initiales (27 ; 37 ; 47 ; 57 ; 67 ; 77) du deuxième groupe de dents (7B) s'étendent en oblique par rapport aux projections des parties initiales (25 ; 35 ; 45 ; 55 ; 65 ; 75) du premier groupe de dents (7A), et **en ce que** les dents (22 ; 32 ; 42 ; 52 ; 62 ; 72) du deuxième groupe (7B) sont, dans la partie incurvée (29 ; 39 ; 49 ; 59 ; 69 ; 79), incurvées de telle sorte que, dans le deuxième plan, l'angle entre les projections de leurs parties terminales (28 ; 38 ; 48 ; 58 ; 68 ; 78) et les projections des parties terminales (26 ; 36 ; 46 ; 56 ; 66 ; 76) du premier groupe de dents (7A) est inférieur à l'angle entre les projections des parties initiales (25, 27 ; 35, 37 ; 45, 47 ; 55, 57 ; 65, 67 ; 75, 77) des deux groupes de dents (7A, 7B), ou possède une direction opposée par rapport à cet angle.

9. Râteau selon l'une des revendications 6 à 8, **caractérisé en ce que** la partie initiale (27 ; 37 ; 47 ; 57 ; 67 ; 77) et la partie terminale (28 ; 38 ; 48 ; 58 ; 68 ; 78) d'une dent (22 ; 32 ; 42 ; 52 ; 62 ; 72) du deuxième groupe (7B) s'étendent respectivement approximativement de façon rectiligne.

10. Râteau selon l'une des revendications 6 à 8, **caractérisé en ce que** la partie incurvée (29 ; 39 ; 49 ; 59 ; 69 ; 79) d'une dent (22 ; 32 ; 42 ; 52 ; 62 ; 72) du deuxième groupe (7B) se raccorde par une transition insensible à sa partie terminale (28 ; 38 ; 48 ; 58 ; 68 ; 78), de sorte que cette dernière s'étend également de manière incurvée.

11. Râteau selon l'une des revendications 1 à 10, **caractérisé en ce que** le premier groupe de dents (7A) se trouve en position antérieure par rapport au deuxième groupe de dents (7B) relativement à la direction de déplacement du râteau (5) lors de son utilisation dans une machine de fenaison.

12. Râteau selon l'une des revendications 1 à 11, **caractérisé en ce qu'**une dent (21 ; 31 ; 41 ; 51 ; 61 ; 71) du premier groupe (7A) et une dent (22 ; 32 ; 42 ; 52 ; 62 ; 72) du deuxième groupe (7B) sont chaque fois réalisées sous forme de dent double (20 ; 30 ; 40 ; 50 ; 60 ; 70) d'un seul tenant et se raccordent l'une à l'autre en un enroulement (23 ; 33 ; 43 ; 53 ; 63 ; 73), au niveau duquel la dent double (20 ; 30 ; 40 ; 50 ; 60 ; 70) peut être reliée à la partie extérieure (6B) du porte-dents (6A, 6B).

13. Dent double pour un râteau d'une machine de fenaison, avec un enroulement pouvant être fixé à un porte-dents et deux dents flexibles partant en saillie des deux extrémités de l'enroulement, sachant que la deuxième dent possède une forme et une orientation telles qu'au moins sa partie terminale libre présente, par rapport à la partie terminale libre de la première dent, une distance dans la direction circonférentielle d'un cercle s'étendant autour de l'axe longitudinal de l'enroulement, et sachant qu'au moins la partie terminale libre (28 ; 38 ; 48 ; 58 ; 68 ; 78) d'une des deux dents (21, 22 ; 31, 32 ; 41, 42 ; 51, 52 ; 61, 62 ; 71, 72) est orientée de telle sorte que, dans un premier plan situé entre les deux dents (21, 22 ; 31, 32 ; 41, 42 ; 51, 52 ; 61, 62 ; 71, 72) et parallèlement à l'axe longitudinal (6C) de l'enroulement (23 ; 33 ; 43 ; 53 ; 63 ; 73), sa projection s'étend en oblique par rapport à la projection de la partie terminale libre (26 ; 36 ; 46 ; 56 ; 66 ; 76) de l'autre dent (21 ; 31 ; 41 ; 51 ; 61 ; 71), **caractérisée en ce que**, dans le premier plan, l'angle entre les projections de la partie terminale libre (28 ; 38 ; 48 ; 58 ; 68 ; 78) de la deuxième dent (22 ; 32 ; 42 ; 52 ; 62 ; 72) et de celle (26 ; 36 ; 46 ; 56 ; 66 ; 76) de la première dent (21 ; 31 ; 41 ; 51 ; 61 ; 71) est d'une grandeur telle que l'étendue de la partie terminale (28 ; 38 ; 48 ; 58 ; 68 ; 78), s'étendant en oblique, d'une des deux dents (21, 22 ; 31, 32 ; 41, 42 ; 51, 52 ; 61, 62 ; 71, 72) dans la direction de l'axe longitudinal (6C) de l'enroulement (23 ; 33 ; 43 ; 53 ; 63 ; 73) est au moins approximativement égale ou supérieure à la longueur de l'enroulement (23 ; 33 ; 43 ; 53 ; 63 ; 73).

14. Dent double selon la revendication 13, **caractérisée en ce que** la première des deux dents possède une forme et une orientation telles qu'au moins sa partie terminale libre s'étend environ perpendiculairement à l'axe longitudinal de l'enroulement (23 ; 33 ; 43 ; 53 ; 63 ; 73), et **en ce que** la partie terminale libre (28 ; 38 ; 48 ; 58 ; 68 ; 78) de la deuxième dent (22 ; 32 ; 42 ; 52 ; 62 ; 72) est orientée de telle sorte que, dans un premier plan situé entre les deux dents (21, 22 ; 31, 32 ; 41, 42 ; 51, 52 ; 61, 62 ; 71, 72) et parallèlement à l'axe longitudinal (6C) de l'enroulement (23 ; 33 ; 43 ; 53 ; 63 ; 73), sa projection s'étend en oblique par rapport à la projection de la partie terminale libre (26 ; 36 ; 46 ; 56 ; 66 ; 76) de la première dent (21 ; 31 ; 41 ; 51 ; 61 ; 71).

15. Dent double selon la revendication 13 ou 14, **caractérisée en ce que**, dans le premier plan, l'angle α entre les projections de la partie terminale libre (28 ; 38 ; 48 ; 58 ; 68 ; 78) de la deuxième dent (22 ; 32 ; 42 ; 52 ; 62 ; 72) et de celle (26 ; 36 ; 46 ; 56 ; 66 ; 76) de la première dent (21 ; 31 ; 41 ; 51 ; 61 ; 71) est au moins égal à 10°.

16. Dent double selon l'une des revendications 13 à 15, **caractérisée en ce que**, dans le premier plan, l'angle α entre les projections de la partie terminale libre (28 ; 38 ; 48 ; 58 ; 68 ; 78) de la deuxième dent (22 ; 32 ; 42 ; 52 ; 62 ; 72) et de celle (26 ; 36 ; 46 ; 56 ; 66 ; 76) de la première dent (21 ; 31 ; 41 ; 51 ; 61 ; 71) est au plus égal à 80°.

17. Dent double selon l'une des revendications 13 à 16, **caractérisée en ce que** la deuxième dent (22 ; 32 ; 42 ; 52 ; 62 ; 72) présente une partie initiale (27 ; 37 ; 47 ; 57 ; 67 ; 77) voisine de l'enroulement (23 ; 33 ; 43 ; 53 ; 63 ; 73) et une partie incurvée (29 ; 39 ; 49 ; 59 ; 69 ; 79) située entre cette partie initiale et la partie terminale libre (28 ; 38 ; 48 ; 58 ; 68 ; 78), et **en ce qu'**on produit par l'incurvation de la partie incurvée (29 ; 39 ; 49 ; 59 ; 69 ; 79) l'allure oblique de la projection de sa partie terminale libre (28 ; 38 ; 48 ; 58 ; 68 ; 78) par rapport à la projection de la partie terminale libre (26 ; 36 ; 46 ; 56 ; 66 ; 76) de la première dent (21 ; 31 ; 41 ; 51 ; 61 ; 71) dans le premier plan.

18. Dent double selon la revendication 17, **caractérisée en ce que** les projections des parties initiales (25, 27 ; 35, 37 ; 45, 47 ; 55, 57 ; 65, 67 ; 75, 77) des deux dents (21, 22 ; 31, 32 ; 41, 42 ; 51, 52 ; 61, 62 ; 71, 72) dans le premier plan s'étendent environ parallèlement entre elles.

19. Dent double selon la revendication 17 ou 18, **caractérisée en ce que**, dans un deuxième plan situé perpendiculairement à l'axe longitudinal (6C) de l'enroulement (23 ; 33 ; 43 ; 53 ; 63 ; 73), la projection de la partie initiale (27 ; 37 ; 47 ; 57 ; 67 ; 77) de la deuxième dent (22 ; 32 ; 42 ; 52 ; 62 ; 72) s'étend en oblique par rapport à la projection de la partie initiale (25 ; 35 ; 45 ; 55 ; 65 ; 75) de la première dent (21 ; 31 ; 41 ; 51 ; 61 ; 71), et **en ce que** la deuxième dent (22 ; 32 ; 42 ; 52 ; 62 ; 72) est, dans la partie incurvée (29 ; 39 ; 49 ; 59 ; 69 ; 79), incurvée de telle sorte que, dans le deuxième plan, l'angle entre la projection de sa partie terminale (28 ; 38 ; 48 ; 58 ; 68 ; 78) et la projection de la partie terminale (26 ; 36 ; 46 ; 56 ; 66 ; 76) de la première dent (21 ; 31 ; 41 ; 51 ; 61 ; 71) est inférieur à l'angle entre les projections des parties initiales (25, 27 ; 35, 37 ; 45, 47 ; 55, 57 ; 65, 67 ; 75, 77) des deux dents (21, 22 ; 31, 32 ; 41, 42 ; 51, 52 ; 61, 62 ; 71, 72), ou possède une direction opposée par rapport à cet angle.

20. Dent double selon l'une des revendications 17 à 19, **caractérisée en ce que** la partie initiale (27 ; 37 ; 47 ; 57 ; 67 ; 77) et la partie terminale (28 ; 38 ; 48 ; 58 ; 68 ; 78) de la deuxième dent (22 ; 32 ; 42 ; 52 ; 62 ; 72) s'étendent respectivement approximativement de façon rectiligne.

21. Dent double selon l'une des revendications 17 à 19, **caractérisée en ce que** la partie incurvée (29 ; 39 ; 49 ; 59 ; 69 ; 79) de la deuxième dent (22 ; 32 ; 42 ; 52 ; 62 ; 72) se raccorde par une transition insensible à sa partie terminale (28 ; 38 ; 48 ; 58 ; 68 ; 78), de sorte que cette dernière s'étend également de manière incurvée.

22. Dent double selon l'une des revendications 13 à 21, **caractérisée en ce que** la première dent (21 ; 31 ; 41 ; 51 ; 61 ; 71) se trouve en position antérieure par rapport à la deuxième dent (22 ; 32 ; 42 ; 52 ; 62 ; 72) relativement à la direction de déplacement de la dent double (20 ; 30 ; 40 ; 50 ; 60 ; 70) lors de son utilisation dans une machine de fenaison.
